## Europäisches Patentamt

## European Patent Office

## Office européen des brevets

(19)

(11) Numéro de publication : **0 398 814 B1**

(12) ## FASCICULE DE BREVET EUROPEEN

(45) Date de publication du fascicule du brevet :
**11.11.92 Bulletin 92/46**

(51) Int. Cl.⁵ : **B01J 4/00,** B01J 8/24,
F22B 31/00

(21) Numéro de dépôt : **90401324.0**

(22) Date de dépôt : **18.05.90**

(54) **Dispositif d'extraction du matériau en particules d'un lit fluidisé hors de l'enceinte de fluidisation.**

(30) Priorité : **19.05.89 FR 8906562**

(43) Date de publication de la demande :
**22.11.90 Bulletin 90/47**

(45) Mention de la délivrance du brevet :
**11.11.92 Bulletin 92/46**

(84) Etats contractants désignés :
**AT BE CH DE DK ES GB GR IT LI LU NL SE**

(56) Documents cités :
**EP-A- 0 236 647
DE-A- 2 356 061
FR-A- 2 287 277
US-A- 3 134 511**

(73) Titulaire : **CHARBONNAGES DE FRANCE,
Etablissement public dit:
Tour Albert 1er 65 avenue de Colmar
F-92507 Rueil Malmaison Cédex (FR)**

(72) Inventeur : **Marlair, Guy
15 bis rue de Wagnonville
F-59128 Flers-en-Escrebieux (FR)**

(74) Mandataire : **Robert, Jean-Pierre et al
CABINET BOETTCHER 23, rue la Boétie
F-75008 Paris (FR)**

## Description

La présente invention concerne un dispositif d'extraction du matériau en particules d'un lit fluidisé hors de l'enceinte de fluidisation qui permet de procéder soit à une régulation du niveau du lit dans l'enceinte de fluidisation, soit à une vidange de l'enceinte, partielle ou totale.

Les procédés industriels mettant en oeuvre un réacteur à lit fluidisé imposent généralement, pour faciliter la conduite du fonctionnement du réacteur, la mise en place de moyens permettant une vidange totale ou partielle des matériaux en particules qui constituent, dans le réacteur, le ou les lits fluidisés.

La vidange partielle doit être possible en fonctionnement car elle constitue un moyen de maîtriser l'évolution du niveau du lit, notamment lorsque celle-ci est à la hausse. C'est par exemple le cas lorsque le flux de particules inertes élutriées est inférieur au flux massique d'inertes entrant dans un réacteur de combustion.

La vidange totale est nécessaire pour pouvoir procéder à des inspections périodiques du réacteur ou à des arrêts d'urgence de l'installation.

Ces dispositifs de vidange doivent répondre à certain nombre d'exigences sévères résultant essentiellement des caractéristiques physiques et thermiques du lit en fonctionnement. Ces dispositifs sont en effet soumis à des contraintes mécaniques et thermiques importantes puisqu'ils sont en contact avec un milieu souvent très abrasif et à température élevée qui exerce une pression non négligeable. Comme en outre ils assurent une communication entre le lit et l'extérieur, ils doivent assurer une fermeture étanche de l'enceinte et doivent être bien refroidis pour préserver la sécurité du matériel et du personnel lors de l'exploitation. Ils doivent par ailleurs pouvoir être pilotés de manière automatique, n'offrir qu'un encombrement minimum et ne pas troubler le régime hydrodynamique de fluidisation.

Les dispositifs à ce jour connus pour assurer cette fonction ne répondent que très imparfaitement à ce cahier des charges. On connaît les orifices de trop plein, les drains de purge qui sont ménagés verticalement ou en pente très accentuées dans le fond de l'enceinte de fluidisation, équipés de sas alvéolaires ou de trappes à guillotine pour leur fermeture ou ouverture.

On connaît également des dispositifs à lits fluidisés de transfert ou des vis d'Archimède refroidies pour l'extraction des particules associées à des classificateurs.

La plupart de ces systèmes sont disposés à l'extrémité de canalisations verticales ou très fortement inclinées qui se remplissent de matériau lorsque le dispositif ne fonctionne pas, ce matériau formant bouchon ou bloquant les mécanismes du fait qu'il se colmate, qu'il se tasse, voire qu'il s'agglomère par réaction chimique ou thermique, ces canalisations étant le siège fréquent de points de surchauffe.

Par ailleurs, la hauteur de ces canalisations est un facteur d'augmentation de la pression hydrostatique s'exerçant sur ces dispositifs d'extraction qui rend encore plus délicate la réalisation de l'étanchéité.

Enfin, outre les inconvénients liés à l'encombrement important de ces dispositifs, à la complexité des moyens de refroidissement auxquels ils font appel, il est souvent nécessaire en aval, d'avoir recours à un matériel spécifique pour le traitement et la reprise des produits ainsi extraits du lit fluidisé.

L'invention entend remédier à ces inconvénients en proposant un dispositif d'extraction du matériau particulaire de conception beaucoup plus simple, d'accès aisé et protégé du point de vue thermique - dans le cas de son application à un générateur thermique- et très facilement connectable à un mécanisme automatique de commande de son fonctionnement.

A cet effet, l'invention a donc pour objet un dispositif d'extraction du matériau en particules d'un lit fluidisé hors de l'enceinte de fluidisation pour la régulation du niveau du lit dans l'enceinte ou la vidange de l'enceinte, qui comprend :

- une ouverture ménagée dans une paroi latérale de l'enceinte de fluidisation, prolongée à l'extérieur de l'enceinte par une tubulure qui lui est sensiblement perpendiculaire,
- une conduite raccordée sensiblement perpendiculairement à cette tutulure et s'étendant vers le bas,
- un piston monté à coulissement étanche dans la tubulure entre une première position dans laquelle il constitue panneau d'obturation de l'ouverture et une seconde position dans laquelle il découvre au moins partiellement le débouché de la conduite dans la tubulure,
- et des moyens de commande du déplacement du piston dans la tubulure.

Dans une application particulière du dispositif selon l'invention à un générateur thermique à lit fluidisé comportant une enveloppe périphérique à double paroi comprenant entre les parois des moyens d'amenée et de sortie d'eau de circulation enveloppant le foyer, la tubulure traverse de manière étanche l'enveloppe périphérique et la conduite est raccordée à la tubulure entre les deux parois de l'enveloppe. Dans le cas où ce générateur thermique comporte une enveloppe périphérique creuse délimitant un volume intermédiaire adjacent au foyer pour le passage des fumées avec, en partie inférieure un collecteurde rassemblement et d'extraction des cendres, la tubulure traverse ledit volume intermédiaire qui constitue la conduite susdite dans laquelle la tubulure débouche par une ouverture latérale inférieure. Dans ce cas la présence du volume intermédiaire facilite de plus l'étanchéité entre le réacteur et l'atmosphère extérieure, étant donné qu'il se comporte comme un sas.

L'invention sera mieux comprise au cours de la description donnée ci-après à titre d'exemple purement indicatif et non limitatif d'un mode de réalisation et de ses applications à un générateur thermique dont l'enveloppe est à double paroi.

Il sera fait référence aux dessins annexés dans lesquels :

- la figure 1 illustre le dispositif selon l'invention adapté à l'enceinte d'un réacteur à lit fluidisé.

- les figures 2 et 3 illustrent deux adaptations du dispositif de l'invention à un générateur thermique à paroi creuse avec circulation d'eau, circulation de fumées et récupération des cendres.

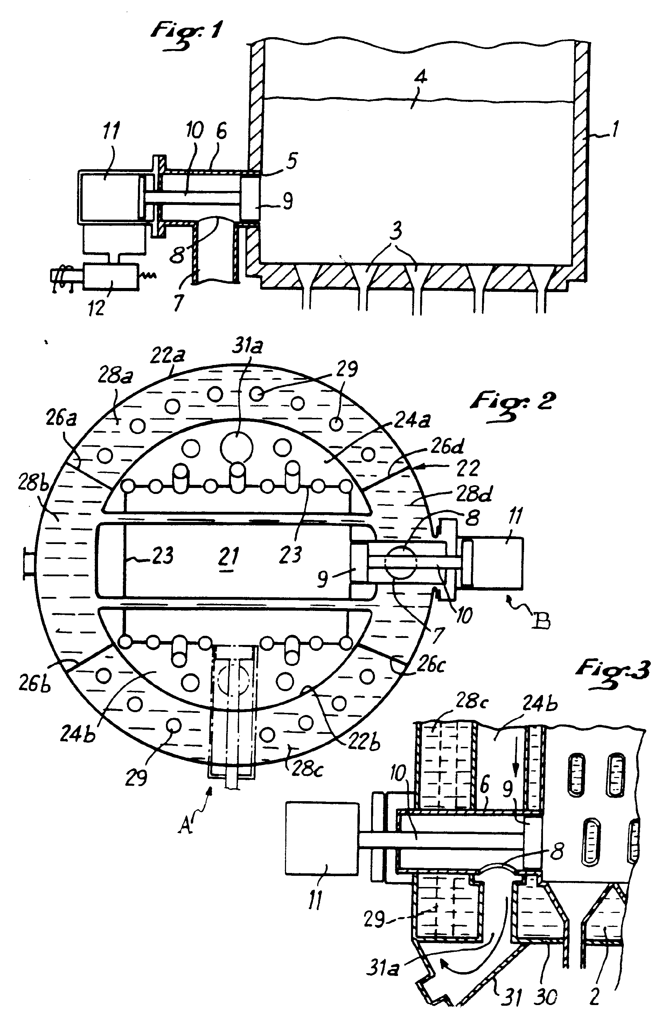

En se reportant tout d'abord à la figure 1 qui illustre le dispositif selon l'invention adapté à une enceinte de fluidisation 1, connue en elle-même et notamment en ce qu'elle possède une grille de fluidisation 2 au travers de laquelle un gaz est soufflé (par les ouvertures 3) pour former un lit 4 fluidisé de matériau particulaire.

L'enceinte 1 comporte une ouverture 5, de préférence située à proximité de la grille de fluidisation 3, prolongée à l'extérieur par une tubulure 6. Cette tubulure sera de préférence horizontale et une conduite 7 lui est raccordée de manière que leurs axes géométriques soient sécants. Cette conduite 7 sera verticale ou fortement inclinée (au voisinage de la verticale) et débouchera dans la tubulure 6 par une ouverture 8 située à la partie inférieure de la tubulure 6. Le diamètre de la conduite 7 pourra être égal ou inférieur à celui de la tubulure 6.

Cette tubulure 6 forme une chemise de guidage pour un dispositif d'obturation mobile de l'ouverture 5. Ce dispositif comprend un piston 9 dont le diamètre est légèrement inférieur à celui intérieur de la tubulure 6 (les sections étant supposées circulaires) pour pouvoir y coulisser facilement tout en assurant une étanchéité correcte. Ce piston 9 est solidaire d'une tige 10 qui est la tige d'un vérin 11, porté par l'extrémité de la tubulure 6, de commande de la manoeuvre du piston 9, le long de cette tubulure 6. On a représenté à la figure une électrovanne 12 qui symbolise l'organe de commande du vérin 11, cette électrovanne pouvant être l'actionneur d'un automatisme asservi à des capteurs de niveau du lit 4 dans l'enceinte 1 ou piloté par un automate programmable.

On comprend que le fonctionnement du dispositif est extrêmement simple. Le déplacement vers la gauche de la figure du piston 9 est d'une amplitude telle que, lorsqu'on veut assurer une vidange de l'enceinte, on découvre l'ouverture 8 mettant ainsi en communication l'intérieur de l'enceinte avec la conduite 6 qui mène à un réceptacle de produit non représenté. Un déplacement vers la droite interrompt cette communication.

Ce dispositif est avantageusement adapté à son utilisation comme régulateur par actions répétées d'ouverture et de fermeture. Le cycle de ces opérations peut très aisément être choisi en fonction des débits à évacuer, au moyen de temporisations pour moduler les échanges de chaleur.

Il est également apte à provoquer l'évacuation totale du lit en maintenant l'électrovanne 12 dans la position correspondante et de réaliser la vidange complète de l'installation.

Ce dispositif trouve une application parfaitement adaptée lorsqu'il est associé à un procédé de fluidisation réalisé au travers de grilles à ouvertures évasées vers le haut qui engendrent une fluidisation non ségrégative des particules (voir par exemple comme illustration de ces grilles les documents FR-A-2.519.877 et 2.588.772).

Cette figure 1 montre que les organes 11, 12 de commande du piston 9 sont éloignés de ce dernier et donc aisément séparables pour maintenance et séparation. En outre, l'éloignement en augmente l'isolation thermique ce qui favorise leur durée de vie et est un facteur de sécurité pour le personnel d'exploitation.

Les figures 2 et 3 illustrent partiellement un réacteur-générateur thermique conforme au document FR-A-2.591.722 qui permet deux cas d'application intéressante du dispositif selon l'invention.

On rappellera brièvement que ce générateur est un générateur qui comprend un foyer à lit fluidisé, à paroi latérale, de type connu en soi et une enveloppe périphérique 22 creuse à double paroi 22a, 22b avec circulation d'eau entre elles qui enveloppe le foyer 1 en limitant avec la paroi latérale 23 de ce dernier un volume intermédiaire 24.

Le foyer 21 a ici une configuration rectangulaire dans l'ensemble ; l'enveloppe périphérique 22 est cylindrique et elle limite avec le foyer 1 deux volumes intermédiaires 24a, 24b distincts et opposés qui sont situés chacun sur un grand côté du foyer 21.

L'enveloppe périphérique 22 est divisée entre ses parois 22a, 22b par des cloisons intérieures, radiales 26a, 26b, 26c, 26d formant quatre compartiments opposés deux à deux. Deux compartiments opposés, de plus grande dimension en sens circonférentiel 28a et 28c contiennent des tubes verticaux 29 de circulation de fumée débouchant dans un collecteur de cendres 31 qui s'étend en-dessous de la paroi inférieure 30 et qui communique par un passage inférieur 31a avec un volume intermédiaire correspondant 24b (voir figure 3). Les fumées de la combustion qui viennent du foyer descendent dans les volumes intermédiaires 24a, 24b, empruntent les collecteurs 31 et montent dans les tubes 29 pour atteindre un conduit de sortie.

Sur la figure 2 on a représenté, ensemble, les deux cas possibles A et B d'équipement de ce générateur avec le dispositif selon l'invention.

En A , il s'agit de l'application vue en coupe sur la figure 3 dans laquelle la conduite 7 est supprimée et remplacée par la chambre 24b débouchant dans la trémie 31 de collecte des cendres (où produits à évacuer). Les fumées, circulant dans le sens des flèches, sont déjà refroidies et donc coopèrent au refroidissement de la chemise ou tubulure 6.

En B , sur la figure 2, la conduite 7 passe dans la chambre 28d. Elle est alors complètement noyée dans cette chambre ce qui permet son refroidissement énergique. Les produits peuvent être ensuite récupérés par l'intermédiaire d'une trémie semblable à celle 31 de la figure 3.

Les avantages de l'invention sont multiples. On notera :

- une capacité réduite grâce à une intégration dans la structure même du réacteur,

- l'absence de dispositifs spécifiques de refroidissement,

- une étanchéité facilitée par un obturateur sollicité uniquement par la charge hydrostatique du lit et par un système faisant office de sas ou profitant d'un sas existant,

- aucune canalisation susceptible de contenir des produits défluidisés donc pas de risques de surchauffe.

- une maintenance facilitée par la grande accessibilité des organes de commande par l'extérieur du réacteur,

- enfin l'utilisation de matériaux de qualité courante du fait du refroidissement efficace.

## Revendications

1. Dispositif d'extraction du matériau en particules d'un lit (4) fluidisé hors de l'enceinte (1) de fluidisation pour la régulation du niveau du lit (4) dans l'enceinte ou la vidange de l'enceinte, caractérisé en ce qu'il comprend :

    - une ouverture ménagée dans une paroi latérale de l'enceinte (1) de fluidisation, prolongée à l'extérieur de l'enceinte par une tubulure (6) qui lui est sensiblement perpendiculaire,

    - une conduite (7) raccordée sensiblement perpendiculairement à cette tubulure (6) et s'étendant vers le bas,

    - un piston (9) monté à coulissement étanche dans la tubulure (6) entre une première position dans laquelle il constitue panneau d'obturation de l'ouverture (5) et une seconde position dans laquelle il découvre au moins partiellement le débouché (8) de la conduite (7) dans la tubulure,

    - et des moyens de commande (11,12) du déplacement du piston dans la tubulure.

2. Dispositif selon la revendication 1, caractérisé en ce que le piston (9) est solidaire d'une tige (10) s'étendant dans la tubulure (6) à l'opposé de l'ouverture (5) susdite, les moyens de commande (11) étant accouplés à cette tige (10) et portés par la tubulure (6).

3. Dispositif selon la revendication 1 ou la revendication 2, caractérisé en ce que l'ouverture (5) prolongée par la tubulure (6) est située à proximité du fond (2) de l'enceinte (1).

4. Dispositif selon l'une quelconque des revendications précédentes appliquée à un générateur thermique à lit fluidisé comportant une enveloppe périphérique (22) à double paroi (22a, 22b) avec une circulation d'eau entre elles le foyer (21), caractérisé en ce que la tubulure (6) traverse de manière étanche l'enveloppe périphérique (22) et en ce que la conduite (7) est raccordée à la tubulure (6) entre les deux parois (22a, 22b) de l'enveloppe.

5. Dispositif selon l'une quelconque des revendications 1 à 3 appliqué à un générateur thermique à lit fluidisé comportant une enveloppe périphérique (22) creuse délimitant un volume (24a) intermédiaire adjacent au foyer (21) pour passage des fumées avec en partie inférieure, un collecteur (31) de rassemblement et d'extraction des cendres, caractérisé en ce que la tubulure (6) traverse ledit volume intermédiaire (24a) qui constitue la conduite (7) susdite dans laquelle la tubulure (6) débouche par une ouverture (8) latérale inférieure.

## Patentansprüche

1. Vorrichtung zum Extrahieren von Materialteilchen eines Wirbelbettes (4) aus dem Wirbelbettbehälter (1) zum Regeln des Niveaus des Wirbelbettes (4) in dem Behälter oder zum Entleeren des Behälters **gekennzeichnet** durch

    - eine in einer Seitenwand des Wirbelbettbehälters (1) ausgebildete Öffnung, die zum Außenraum des Behälters hin durch einen Rohrstutzen (6) verlängert ist, der im wesentlichen senkrecht zur Seitenwand gerichtet ist,

    - eine Leitung (7), die im wesentlichen senkrecht zu diesem Rohrstutzen (6) mit diesem verbunden ist und sich nach unten erstreckt,

    - einen Kolben (9), der dicht abschließend in dem Rohrstutzen (6) zwischen einer ersten Stellung, in der er eine Verschlußplatte für die Öffnung (5) bildet, und einer zweiten Stellung gleitend verschiebbar gelagert ist, in der er die Mündung (8) der Leitung (7) in den Rohrstutzen mindestens teilweise verschließt,

    - und eine Steuereinrichtung (11, 12) zum Verstellen des Kolbens in dem Rohrstutzen,

**2.** Vorrichtung nach Anspruch 1, dadurch **gekennzeichnet,** daß der Kolben (9) mit einer Stange (10) verbunden ist, die sich in dem Rohrstutzen (6) in die zur oben genannten Öffnung (5) entgegengesetzte Richtung erstreckt, wobei die Steuereinrichtung (11) mit dieser Stange (10) verbunden und von dem Rohrstutzen (6) gehalten ist.

**3.** Vorrichtung nach Anspruch 1 oder 2, dadurch **gekennzeichnet**, daß die durch den Rohrstutzen (6) verlängerte Öffnung (5) nahe dem Boden (2) des Behälters (1) liegt.

**4.** Vorrichtung nach einem der vorhergehenden Ansprüche bei Verwendung für einen Wärmegenerator mit Wirbelbett, der eine Außenhülle (22) in Form einer von Wasser durchströmten Doppelwand (22a, 22b) hat, welche den Feuerraum (21) umgibt, dadurch **gekennzeichnet**, daß der Rohrstutzen (6) die Außenhülle (22) dicht abschließend durchsetzt und daß die Leitung (7) zwischen den beiden Wänden (22a, 22b) der Hülle mit dem Rohrstutzen (6) verbunden ist.

**5.** Vorrichtung nach einem der vorhergehenden Ansprüche 1 bis 3 bei Anwendung für einen Wärmegenerator mit Wirbelbett, umfassend eine hohle Außenhülle (22), welche einen an den Feuerraum (21) angrenzenden Zwischenraum (24a) zum Durchzug der Rauchgase begrenzt, wobei dieser Zwischenraum einen unteren Teil, einen Sammler (31) zum Sammeln und zum Entfernen der Asche hat, dadurch **gekennzeichnet**, daß der Rohrstutzen (6) den Zwischenraum (24a) durchsetzt, welcher die oben genannte Leitung (7) bildet, in welche der Rohrstutzen (6) über eine seitliche untere Öffnung (8) mündet.

**Claims**

**1.** A device for extracting particulate material of a fluidized bed (4) from the fluidization enclosure (1) in order to regulate the level of the bed (4) inside the enclosure or in order to empty the enclosure, the device being characterized in that it comprises:

an opening provided through a side wall of the fluidization enclosure (1) and extended outside the enclosure by a tube (6) which extends substantially perpendicularly to the side wall;

a duct (7) connected substantially perpendicularly to said tube (6) and extending downwards;

a piston (9) slidably mounted in sealed manner inside the tube (6) to slide between a first position in which it constituted a panel shutting the opening (5) and a second position in which it at least partially uncovers the opening (8) of the duct (7) into the tube; and

control means (11, 12) for displacing the piston inside the tube.

**2.** A device according to claim 1, characterized in that the piston (9) is fixed to a rod (10) extending along the tube (6) away from the above-mentioned opening (5), with the control means (11) being coupled to said rod (10) and carried by the tube (6).

**3.** A device according to claim 1 or 2, characterized in that the opening (5) extended by the tube (6) is extended close to the bottom (2) of the enclosure (1).

**4.** A device according to any preceding claim, applied to a fluidized bed heat generator including a double walled (22a, 22b) peripheral shell (22) with water flowing therebetween, surrounding the hearth (21) device being characterized in that the tube (6) passes in sealed manner through the peripheral shell (22) and in that the duct (7) is connected to the tube (6) between the two walls (22a, 22b) of the shell.

**5.** A device according to any one of claims 1 to 3, applied to a fluidized bed heat generator including a hollow peripheral shell (22) delimiting an intermediate volume (24a) adjacent to a hearth (21) for passing smoke and having a collector (31) at its bottom for collecting and extracting ash, the device being characterized in that tube (6) passes through the said intermediate volume (24a) which constitutes the above-mentioned duct (7) into which the tube (6) opens out via a bottom lateral opening (8).

Fig. 1

Fig. 2

Fig. 3